# EUROPÄISCHE PATENTANMELDUNG

(11) **EP 3 397 008 A1**
(43) Veröffentlichungstag der Anmeldung: **31.10.2018**
(21) Anmeldenummer: 17167998.8
(22) Anmeldetag: 25.04.2017
(51) Int. Cl.: H04W 52/02, G06K 19/073

(54) **VERFAHREN UND ANORDNUNG ZUR INBETRIEBNAHME EINES BATTERIEBETRIEBENEN VOR MECHANISCHEM ZUGRIFF ZUMINDEST TEILWEISE GESCHÜTZTEN UND ZU EINER, INSBESONDERE NACH DEM NEAR FIELD COMMUNICATION , NFC-, STANDARD FUNKTIONIERENDEN, NAHFELDKOMMUNIKATION AUSGESTALTETEN ERSTEN GERÄTES**

(71) Anmelder: Siemens Aktiengesellschaft, 80333 München (DE)
(72) Erfinder: Scheibner, Dirk, 90473 Nürnberg (DE); Sinn, Ulrich, 91056 Erlangen (DE)

(57) **Zusammenfassung**

Die Erfindung betrifft Verfahren sowie eine Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes bei der bei Detektion eines ins Nahfeld des ersten Gerätes gebrachten mobilen zur Nahfeldkommunikation ausgestalteten zweiten Gerät die Versorgung des ersten Gerätes mit Energie aus der Batterie manipuliert wird.

## Beschreibung

Verfahren und Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes

Diese Erfindung betrifft ein Verfahren zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes gemäß dem Oberbegriff des Anspruchs 1 sowie eine Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes gemäß dem Oberbegriff des Anspruchs 9.

Ein bekannter Vorgang ist es, Geräte an Endkunden zu liefern, die batteriebetrieben und bei Auslieferung bereits mit einer Batterie bestückt sind.

Nachteilig hierbei ist es, dass durch die angeschlossene Versorgung bereits eine Stromentnahme geschieht, so dass die Batterie bei Auslieferung bzw. bis zu einer Erstnutzung schon Ladung verloren hat, schlimmstenfalls vollständig entladen ist.

Dem kann begegnet werden, in dem man die Batterien separat vom Gerät liefert, so dass sie zu einem späteren Zeitpunkt eingesetzt und somit später belastet werden.

Insbesondere wenn es sich bei den ausgelieferten Geräten, um zumindest teilweise, zugriffs- und/oder manipulationsgeschützte Geräte handelt, ist dies aber nicht möglich, so dass zum Schutz vor Verbrauch Isolierstreifen zwischen Batterie-und Gerätekontakten angebracht sind, die vom Endkunden zur Inbetriebnahme abgezogen wird.

Diese Lösung weist allerdings bei Geräten höherer Schutzklassen den Nachteil auf, dass kostentreibende zusätliche Schutzvorkehrungen getroffen werden müssen, die die von einer Öffnung für die Isolierstreifen ausgehenden Gefahren minimieren sollen.

Die der Erfindung zugrundeliegende Aufgabe ist es eine Lösung anzugeben, die die aus dem Stand der Technik bekannten Lösungen verbessert.

Diese Aufgabe wird durch Verfahren zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes gemäß des Oberbegriffs des Anspruchs 1 durch dessen kennzeichnenden Merkmale gelöst sowie durch die Verfahren zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes gemäß dem Oberbegriff des Anspruchs 9 durch dessen kennzeichnenden Merkmale gelöst.

Bei dem erfindungsgemäßen Verfahren zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes wird bei Detektion eines ins Nahfeld des ersten Gerätes gebrachten mobilen zur Nahfeldkommunikation ausgestaltetes zweites Gerät die Versorgung des ersten Gerätes mit Energie aus der Batterie manipuliert.

Hierdurch sind, insbesondere durch das Verwenden von NFC, gesicherte berührungslose Eingriffe auf dem zweiten Gerät möglich. Hiermit sind zudem vielfältige Steuerungsmöglichkeiten möglich, insbesondere zum Energiemanagement der Batterie.

Vorzugsweise wird das erfindungsgemäße Verfahren derart weitergebildet, dass die Detektion auf Grundlage eins Aussendens und Empfangens eines Signals der Nahfeldkommunikation vom ersten Gerät zum zweiten und/oder vom zweiten Gerät zum ersten bewirkt wird. Hierdurch sind Freiheiten beim Design gegeben, insbesondere eine Rollenverteilung, beispielsweise wer die Manipulation anstößt, kann flexibel gestaltet werden.

Besonders bevorzugt wird das erfindungsgemäße Verfahren dabei derart weitergebildet, dass das zweite Gerät aufgrund der Detektion aus einem, insbesondere durch Beschränkung der Versorgung auf, vorzugsweise die Nahfeldkommunikation bereitstellende, Teile des zweiten Gerätes realisierten, Energiesparmodus geweckt wird. Hiermit kann der Energieverbrauch drastisch reduziert und die Betriebsdauer der Batterie deutlich erhöht werden. Ein Wecken aus einem auf die Nahfeldkommunikation versorgenden Energiesparmodus wird dabei nur bei einer Nahfeldkommunikation vorteilhaft eingesetzt werden, wenn das zweite Gerät nicht durch die seitens des ersten Gerätes übertragenen Energie versorgt wird.

Bei der Weiterbildung des erfindungsgemäßen Verfahrens nach dem das Wecken über eine Interrupleitung des zweiten Gerätes durchgeführt wird, wird eine einfach zu implementierende Methode zur Manipulation des Energiemanagements bereitgestellt.

Wird das erfindungsgemäße Verfahren derart weitergebildet, dass das zweite Gerät mit mindestens einer weiteren, insbesondere Funk-, kommunikationsschnittstelle betreibbar ist und die Detektion eine, insbesondere gemäß Challenge-Response-Prinzip funktionierende, Authentifizierungs- und/oder Konfigurationsprozedur über die Funkkommunikationsschnittstelle auslöst und durch die Batterie mit Energie versorgen lässt, kann eine einfache und sichere Methode zur Inbetriebnahme durch eine berechtigte Person bzw. ein berechtigtes erstes Gerät gewährleistet werden.

Bei einer alternativen oder ergänzenden Weiterbildung des erfindungsgemäßen Verfahrens wird die weitere Kommunikationsschnittstelle zum Austausch von Daten zur Konfiguration des zweiten Gerätes durch einen entfernte, insbesondere als Cloud-Server betriebene, Steuereinrichtung durchgeführt. Hierdurch wird eine für einen Datenaustausch leistungsfähigere Kommunikation bereitgestellt, die typischer Weise einen hören Energieverbrauch aufweist, aber durch die Erfindung der Beginn des Verbrauchs bis zur Inbetriebnahme zurückgestellt wird.

Erfolgt bei einer Authentifizierung, beispielsweise im Rahmen der Authentifizierungs- und/oder Konfigurationsprozedur, eine erste Überprüfung derart, dass mindestens eine Identifizierungsinformation vom ersten Gerät angefordert wird und nach Empfang der Identifizierungsinformation ein Vergleich mit im zweiten Gerät hinterlegten Identifizierungsinformationen, kann eine einfache Realisierung einer eingeschränkten Zahl berechtigter realisiert werden, die zudem aufgrund des geschützten Gerätes schwerer manipuliert werden können.

Erfolgt bei einer Authentifizierung, beispielsweise im Rahmen der Authentifizierungs- und/oder Konfigurationsprozedur, eine zweite Überprüfung derart, dass mindestens eine Identifizierungsinformation vom zweiten Gerät angefordert wird und nach Empfang der Identifizierungsinformation ein Vergleich mit im ersten Gerät und/oder einer entfernten Steuereinrichtung verfügbar hinterlegten Identifizierungsinformationen wird eine Plagiatsprüfung auf einfache Art realisiert.

Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes, gekennzeichnet durch Mittel, die derart ausgestaltet sind, dass bei Detektion eines ins Nahfeld des ersten Gerätes gebrachten mobilen zur Nahfeldkommunikation ausgestalteten zweiten Gerätes die Versorgung des ersten Gerätes mit Energie aus der Batterie manipuliert wird.

Die Erfindung betrifft weiterhin eine Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes, gekennzeichnet durch Mittel zur Durchführung des Verfahrens sowie Mittel zur Durchführung der Weiterbildungen des Verfahrens.

Die erfindungsgemäße Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes, ermöglicht durch dessen Implementierung die Verwirklichung der zum Verfahren genannten Vorteile.

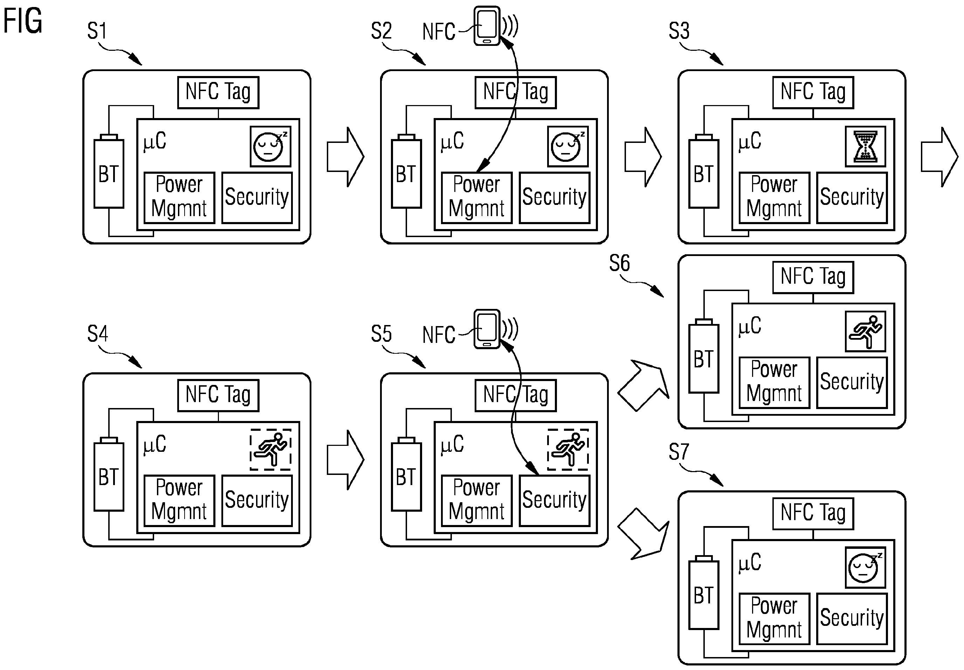

Weitere Vorteile und Einzelheiten der Erfindung werden nun ausgehend von dem in der einzigen Figur dargestellten Ausführungsbeispiel der Erfindung näher erläutert. Dabei zeigt die
- FIGUR: ein Ablaufdiagram mit vereinfachter Darstellung eines Ausführungsbeispiels des erfindungsgemäßen Verfahrens sowie der erfindungsgemäßen Anordnung

In der FIGUR ist der Ablauf eines Ausführungsbeispiels des erfindungsgemäßen Verfahrens anhand eines vereinfacht dargestellten Ausführungsbeispiels der erfindungsgemäßen Anordnung dargestellt.

Bei dem dargestellten Ausführungsbeispiel der Anordnung handelt es sich um ein Gerät G, welches über eine Funksende-/Funkempfangseinrichtung NFC-TAG, die zur Nahfeldkommunikation ausgestaltet ist, verfügt.

Dieses Gerät G weist zudem eine Batterie BT auf, welche durch einen energiesparenden Modus, dargestellt durch das Schlafpiktogramm, in dem sich das Gerät G in einem Grundzustand befindet, geschont wird.

Zur Steuerung des Gerätes G, insbesondere des Energiemanagements POWERMNGMT, sowie von Sicherheitsprozeduren, durch Modul SECURITY dargestellt, weist das Gerät einen Mikroprozessor µP auf.

Zu sehen ist ferner ein Mobilteil NFC, welches beispielsweise als Smartphone ausgebildet ist und ebenfalls zu einer Nahfeldkommunikation eingerichtet ist.

Das Ausführungsbeispiel des Verfahrens geht bei der gezeigten Anordnung aus von einem ersten Schritt S1, in dem sich das Gerät G in dem stromsparenden Betriebsmodus befindet.

Wird nun in einem zweiten Schritt S2 in das Nahfeld des Geräts G ein zur gleichen Nahfeldkommunikation, beispielsweise gemäß dem NFC Standard, ausgebildetes Mobilteil NFC gebracht, kommuniziert dieses Mobilteil NFC über das Funksende-/Funkempfangsmoduls NFT-TAG mit dem Gerät G, insbesondere mit der Energiesteuerung POWERMGMT. Dies hat zur Folge, dass das Gerät G über die NFC Kommunikation aus dem stromsparenden Betriebsmodus, in dem es sich beispielsweise nach Auslieferung zunächst befindet, aufgeweckt wird und die Batterie BT nun die Schaltung mit mehr Energie versorgt.

Hierauf startet das Gerät G in einem dritten Schritt S3 und fährt das System gesteuert durch den Mikroprozessor µP hoch.

Da gemäß Ausführungsbeispiel das Gerät G nach dem Wecken sich in einem Initialisierungszustand befindet und somit unkonfiguriert ist, ist das Gerät G in dem folgenden vierten Schritt S4 zunächst zwar betriebsbereit aber eine eingeschränkte Funktionalität aufweisend, bei dem eine Konfigurations- und/oder Authorisierungsprozedur gestartet wird.

Dies bewirkt, dass in einem fünften Schritt S5 eine Authentifizierung des Gerätes G durch Austausch von Daten einer Authentifizierungsmethode, beispielsweise dem "Challenge-Response", per NFC Kommunikation erfolgt.

Ist die Authentifizierung erfolgreich, folgt in einem sechsten Schritt S6 der Erhalt der Betriebsbereitschaft des Gerätes G und es kann, soweit es sich um einen Initialisierungsvorgang handelt, eine Initialisierung des Gerätes G erfolgen oder generell eine Konfiguration für den nun folgenden Vollbetrieb des Gerätes G.

Ist die Authentifizierung jedoch nicht erfolgreich, geht das Gerät in den stromsparenden Betriebsmodus zurück.

Die Erfindung ist nicht auf die beschriebenen Ausführungsbeispiele beschränkt. Vielmehr umfasst es alle möglichen Kombinationen, der durch die Ansprüche definierten unter Schutz gestellten Merkmale.

So nutzt das beschriebene Beispiel als Nahfeldkommunikation eine NFC Schnittstelle und weist dazu eine entsprechende NFC Antenne und den NFC-Tag bzw. eine integrierte NFC Schaltung auf, kann aber auch gemäß anderer RFID Technologien oder damit vergleichbarer Technologien ausgestaltet sein, die eine drahtlose Nahfeldkommunikation ermöglichen, sowie vergleichbare Sicherheitsstandards ermöglichen.

Das Wecken erfolgt beim Beispiel über eine Interruptleitung ist aber hierauf auch nicht beschränkt. Vergleichbare alternative Technologien können je nach Designanforderungen zum Einsatz kommen, soweit sie die Funktionalität des Weckens bewirken.

Weiteres ist bei dem Beispiel ein Szenario dargestellt, welches darauf basiert, dass das Gerät G sich nach dem Einbau der Batterie in einem stromsparenden Modus befindet und eine deaktivierte Funkschnittstelle aufweist. Denkbar ist als Alternative auch, dass der stromsparende Zustand sich auch zu späteren Zeiten einstellt und das Gerät zum Normalbetrieb geweckt und eingestellt wird. Ferner ist es denkbar, dass die insbesondere zur Kommunikation mit einer Cloud, genutzte Funkschnittstelle durch eine leitungsgebundene oder auf Lichtsignale basierende Kommunikationsschnittstelle ersetzt wird.

Im Beispiel kommt als zweites Gerät NFC ein Smartphone mit spezifischer Software zum Einsatz. Denkbar sind auch Tabletts oder andere mobile Geräte, die zur Aktivierung gemäß erfindungsgemäßen Verfahren ausgestaltet und betrieben werden können. Beispielsweise Steuergeräte, die u.a. speziell für diesen Anwendungsfall designt sind.

Die beschriebene Authentifizierung muss zudem nicht auf das Challenge-Response-Prinzip eingeschränkt sein und kann zudem nicht nur eine Ermittlung, ob der Inbetriebnehmer NFC zur Inbetriebnahme berechtigt ist, beinhalten, sondern alternativ oder ergänzend auch eine Authentifizierung dahingehend, ob es sich beim inbetriebgenommenen Gerät G um eine Originalkomponente handelt.

Das Gerät G wird bei Erfolg betrieben und kann dann eingerichtet werden, so dass sonstige Funktionalitäten des Geräts (z.B. ein digitales Typenschild) genutzt werden. Schlägt die Authentifizierung fehl, geht das Gerät wieder in den stromsparenden Betriebsmodus mit deaktivierter Funkschnittstelle über.

Ferner ist es denkbar, dass das Gerät mehrere Funkschnittstellen umfasst und für separate Anwendungen nutzt, wie beispielsweise eine WLAN-Schnittstelle für eine Cloud-Anbindung und Bluetooth für eine lokale Benutzerschnittstelle. In so einem Fall kann bei einer Weiterbildung der Erfindung ein energiesparender Betrieb realisiert werden, indem lediglich die lokale Benutzerschnittstelle per NFC aktiviert wird und nicht ständig in Betrieb sein muss.

Bei batterieversorgten Geräten wie beispielsweise der Elektronik für das Smart Motor Concept von Siemens", die mit drahtloser Schnittstelle und geschütztem Gehäuse (z.B. Gehäuse wasserdicht) und
- zur Ermittlung von Betriebs- und Zustandsparametern verschieden Sensordaten liefert (und daher diverse Kommunikationsschnittstellen aufweist)
- mit anderen Funktionalen Einheiten, wie einem Motor, als Einheit ausgestaltet ist
- und bei einem Feldeinsatz für eine Aktivierung per Cloud-Anbindung ausgestaltet ist,
löst die Erfindung folgende Probleme und ist daher besonders geeignet:
- Die energiesparender Lagerung mit eingebauter Batterie ab Fertigung
- Eine einfache Inbetriebnahme und Funknetzanmeldung bzw. die Aktivierung einer Cloudanordnung
- Realisierung eines Plagiatschutzes, so dass nur zertifizierte Geräte in Betrieb genommen werden können.

## Patentansprüche

1. Verfahren zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes, **dadurch gekennzeichnet, dass** bei Detektion eines ins Nahfeld des ersten Gerätes gebrachten mobilen zur Nahfeldkommunikation ausgestaltetes zweites Gerät die Versorgung des ersten Gerätes mit Energie aus der Batterie manipuliert.

2. Verfahren nach dem vorhergehenden Anspruch, **dadurch gekennzeichnet, dass** die Detektion auf Grundlage eines Aussendens und Empfangens eines Signals der Nahfeldkommunikation vom ersten Gerät zum zweiten und/oder vom zweiten Gerät zum ersten bewirkt wird.

3. Verfahren nach einem der vorhergehenden Ansprüche, **dadurch gekennzeichnet, dass** das zweite Gerät aufgrund der Detektion aus einem, insbesondere durch Beschränkung der Versorgung auf, insbesondere die Nahfeldkommunikation bereitstellende, Teile des zweiten Gerätes realisierten, Energiesparmodus geweckt wird.

4. Verfahren nach dem vorhergehenden Anspruch, **dadurch gekennzeichnet, dass** das Wecken über eine Interruptleitung des zweiten Gerätes durchgeführt wird.

5. Verfahren nach dem vorhergehenden Anspruch, **dadurch gekennzeichnet, dass** das zweite Gerät mit mindestens einer weiteren, insbesondere Funk-, kommunikationsschnittstelle betreibbar ist und die Detektion eine, gemäß Challenge-Response-Prinzip funktionierende, Authentifizierungs- und/oder Konfigurationsprozedur über die Funkkommunikationsschnittstelle auslöst und durch die Batterie mit Energie versorgen lässt.

6. Verfahren nach dem vorhergehenden Anspruch, **dadurch gekennzeichnet, dass** die weitere Kommunikationsschnittstelle zum Austausch von Daten zur Konfiguration des zweiten Gerätes durch einen entfernten, insbesondere als Cloud-Server betriebene, Steuereinrichtung durchgeführt wird.

7. Verfahren nach einem der vorhergehenden Ansprüche, **dadurch gekennzeichnet, dass** bei einer Authentifizierung, beispielsweise im Rahmen der Authentifizierungs- und/oder Konfigurationsprozedur, eine erste Überprüfung derart erfolgt, dass mindestens eine Identifizierungsinformation vom ersten Gerät angefordert wird und nach Empfang der Identifizierungsinformation ein Vergleich mit im zweiten Gerät hinterlegten Identifizierungsinformationen erfolgt.

8. Verfahren nach einem der vorhergehenden Ansprüche, **dadurch gekennzeichnet, dass** bei einer Authentifizierung, beispielsweise im Rahmen der Authentifizierungs- und/oder Konfigurationsprozedur, eine zweite Überprüfung derart erfolgt, dass mindestens eine Identifizierungsinformation vom zweiten Gerät angefordert wird und nach Empfang der Identifizierungsinformation ein Vergleich mit im ersten Gerät und/oder einer entfernten Steuereinrichtung verfügbar hinterlegten Identifizierungsinformationen erfolgt.

9. Anordnung zur Inbetriebnahme eines batteriebetriebenen vor mechanischem Zugriff zumindest teilweise geschützten und zu einer, insbesondere nach dem "Near Field Communication", NFC-, Standard funktionierenden, Nahfeldkommunikation ausgestalteten ersten Gerätes, **gekennzeichnet durch** Mittel, die derart ausgestaltet sind, dass bei Detektion eines ins Nahfeld des ersten Gerätes gebrachten mobilen zur Nahfeldkommunikation ausgestalteten zweiten Gerätes die Versorgung des ersten Gerätes mit Energie aus der Batterie manipuliert wird.

10. Anordnung nach dem vorhergehenden Anspruch, **gekennzeichnet durch** Mittel zur Durchführung des Verfahrens nach einem der Ansprüche 2 bis 8.
